# EUROPEAN PATENT APPLICATION

(11) **EP 2 650 835 A1**
(43) Date of publication of application: **16.10.2013**
(21) Application number: 12819667.2
(22) Date of filing: 27.02.2012
(51) Int. Cl.: G06Q 30/02

(54) **DEVICE FOR PROVIDING INFORMATION, METHOD FOR PROVIDING INFORMATION, PROGRAM FOR PROVIDING INFORMATION, AND COMPUTER-READABLE RECORDING MEDIUM STORING PROGRAM FOR SAME**

(30) Priority: 29.07.2011 JP 2011167309
(71) Applicant: Rakuten, Inc., Tokyo 140-0002 (JP)
(72) Inventor: KATAGIRI Yoko, Tokyo 140-0002 (JP)
(74) Representative: HOFFMANN EITLE
(86) International application number: PCT/JP2012/054816
(87) International publication number: WO 2013/018391

(57) **Abstract**

An information providing device (50) includes a first object specifying unit (51) that, by referring to a comparison history database (32) that stores comparison information indicating that a user has made a comparison between a plurality of objects of trading and a reservation record database (33) that stores reservation information indicating an object of trading ordered from a user as a result of a comparison with another object of trading, specifies an object of trading included in the comparison information and not included in the order information corresponding to the comparison information as a first object of trading, a second object extraction unit (52) that, by referring to the above databases (32) and (33), extracts a second object of trading compared with the first object of trading and ordered from a user, a recommendation information generation unit (53) that generates recommendation information based on trading object information of the second object of trading read from a facility database (31) that stores trading object information, and a transmitting unit (54) that presents the recommendation information to an offerer of the first object of trading.

## Description

### Technical Field

One embodiment of the present invention relates to an information providing device for providing useful information to those who offer objects of trading, an information providing method, an information providing program, and a computer-readable recording medium storing the program.

### Background Art

Frameworks that allow users to make a comparison between objects of trading have been known. For example, the website described in the following Non Patent Literature 1 has a function of displaying a comparative table of items when a user checks the boxes of two or more given items included in a list of items, which are objects of trading, and presses "Compare" button. The user can choose an item using the comparative table as a reference.

### Citation List

### Patent Literature

NPL 1: Kakaku.com, Inc. "Kakaku.com" [online], Internet <URL: http://kakaku.com/>

### Summary of Invention

### Technical Problem

On the other hand, from the viewpoint of offerers of objects of trading who desire to understand the needs of users, it is convenient if it is possible to know how users make comparisons between objects of trading. It is therefore demanded to provide information for understanding the needs of users to those who offer objects of trading.

### Solution to Problem

An information providing device according to one embodiment of the present invention includes a specifying unit that, by referring to a comparison information storage unit that stores comparison information indicating that a user has made a comparison between a plurality of objects of trading and an order information storage unit that stores order information indicating an object of trading ordered from a user as a result of a comparison with another object of trading, specifies an object of trading included in the comparison information and not included in the order information corresponding to the comparison information as a first object of trading, an extraction unit that, by referring to the comparison information storage unit and the order information storage unit, extracts a second object of trading compared with the first object of trading and ordered from a user, a generation unit that generates recommendation information based on trading object information of the second object of trading read from a trading object storage unit that stores trading object information, and a presentation unit that presents the recommendation information to an offerer of the first object of trading.

An information providing method according to one embodiment of the present invention is an information providing method executed by an information providing device, the method including a specifying step of, by referring to a comparison information storage unit that stores comparison information indicating that a user has made a comparison between a plurality of objects of trading and an order information storage unit that stores order information indicating an object of trading ordered from a user as a result of a comparison with another object of trading, specifying an object of trading included in the comparison information and not included in the order information corresponding to the comparison information as a first object of trading, an extraction step of, by referring to the comparison information storage unit and the order information storage unit, extracting a second object of trading compared with the first object of trading and ordered from a user, a generation step of generating recommendation information based on trading object information of the second object of trading read from a trading object storage unit that stores trading object information, and a presentation step of presenting the recommendation information to an offerer of the first object of trading.

An information providing program according to one embodiment of the present invention causes a computer to implement a specifying unit that, by referring to a comparison information storage unit that stores comparison information indicating that a user has made a comparison between a plurality of objects of trading and an order information storage unit that stores order information indicating an object of trading ordered from a user as a result of a comparison with another object of trading, specifies an object of trading included in the comparison information and not included in the order information corresponding to the comparison information as a first object of trading, an extraction unit that, by referring to the comparison information storage unit and the order information storage unit, extracts a second object of trading compared with the first object of trading and ordered from a user, a generation unit that generates recommendation information based on trading object information of the second object of trading read from a trading object storage unit that stores trading object information, and a presentation unit that presents the recommendation information to an offerer of the first object of trading.

A computer-readable recording medium according to one embodiment of the present invention stores an information providing program causing a computer to implement a specifying unit that, by referring to a comparison information storage unit that stores comparison information indicating that a user has made a comparison between a plurality of objects of trading and an order information storage unit that stores order information indicating an object of trading ordered from a user as a result of a comparison with another object of trading, specifies an object of trading included in the comparison information and not included in the order information corresponding to the comparison information as a first object of trading, an extraction unit that, by referring to the comparison information storage unit and the order information storage unit, extracts a second object of trading compared with the first object of trading and ordered from a user, a generation unit that generates recommendation information based on trading object information of the second object of trading read from a trading object storage unit that stores trading object information, and a presentation unit that presents the recommendation information to an offerer of the first object of trading.

According to these embodiments, the first object of trading that is included in the comparison information and not included in the order information is specified. The first object of trading is an object of trading that has been compared with another object of trading but not ordered by a user. Then, the second object of trading that has been compared with the first object of trading and ordered is extracted, the recommendation information is generated based on the information of the second object of trading, and the recommendation information is presented to an offerer of the first object of trading. In this manner, by presenting the information of the second object of trading that has been ordered as a result of a comparison with the first object of trading that has not been ordered to an offerer of the first object of trading, the offerer can understand the needs of the user.

In the information providing device according to another embodiment, the generation unit may calculate the number of times searched for the second object of trading by referring to the comparison information storage unit, and generate the recommendation information based on the trading object information of the second object of trading where the number of times searched is equal to or larger than a predetermined threshold. In this case, because the recommendation information is generated based on the information of the second object of trading for which the users' needs are likely to be great, the usefulness of the recommendation information increases.

In the information providing device according to yet another embodiment, the generation unit may calculate a conversion rate of the second object of trading by referring to the comparison information storage unit and the order information storage unit, and generate the recommendation information based on the trading object information of the second object of trading where the conversion rate is equal to or larger than a predetermined threshold. In this case, the recommendation information can be generated based on the information of the second object of trading for which the users' needs are likely to be great. In this case, because the recommendation information is generated based on the information of the second object of trading for which the users' needs are likely to be great, the usefulness of the recommendation information increases.

In the information providing device according to yet another embodiment, the trading object information may include fixed information indicating fundamental attributes of an object of trading and additional information indicating additional attributes of the object of trading, and the generation unit may generate the recommendation information based on the additional information of the second object of trading without using the fixed information of the second object of trading.

In the information providing device according to yet another embodiment, the comparison information may be generated, when page transition between web pages of a plurality of objects of trading is made, by associating the plurality of objects of trading with each other. In this manner, by taking the page transition into consideration, it is possible to accurately estimate the objects of trading compared by a user and automatically generate the comparison information.

In the information providing device according to yet another embodiment, the comparison information may be generated by associating a plurality of objects of trading corresponding to a plurality of web pages displayed for a specified period of time or longer within a specified time range with each other. In this manner, by taking the display time into consideration, it is possible to accurately estimate the objects of trading compared by a user and automatically generate the comparison information.

In the information providing device according to yet another embodiment, the comparison information may be generated, when an operation for the same page transition is made for a plurality of objects of trading, by associating the plurality of objects of trading with each other. In this manner, by taking the operation for page transition into consideration, it is possible to accurately estimate the objects of trading compared by a user and automatically generate the comparison information.

### Advantageous Effects of Invention

According to one aspect of the present invention, it is possible to provide information for understanding the needs of users to those who offer objects of trading.

### Brief Description of Drawings

Fig. 1 is a diagram showing an overall configuration of an accommodation reservation system according to an embodiment.
Fig. 2 is a diagram showing an example of facility information and plan information.
Fig. 3 is a diagram showing an example of comparison information.
Fig. 4 is a diagram showing an example of reservation information.
Fig. 5 is a diagram showing a hardware configuration of an information providing device shown in Fig. 1.
Fig. 6 is a diagram showing a functional configuration of the information providing device shown in Fig. 1.
Fig. 7 is a flowchart showing an operation of the information providing device shown in Fig. 1.
Fig. 8 is a diagram showing a configuration of an information providing program according to an embodiment.

### Description of Embodiments

An embodiment of the present invention is described hereinafter in detail with reference to the appended drawings. In the description of the drawings, the same or equivalent elements are denoted by the same reference symbols, and the redundant explanation thereof is omitted.

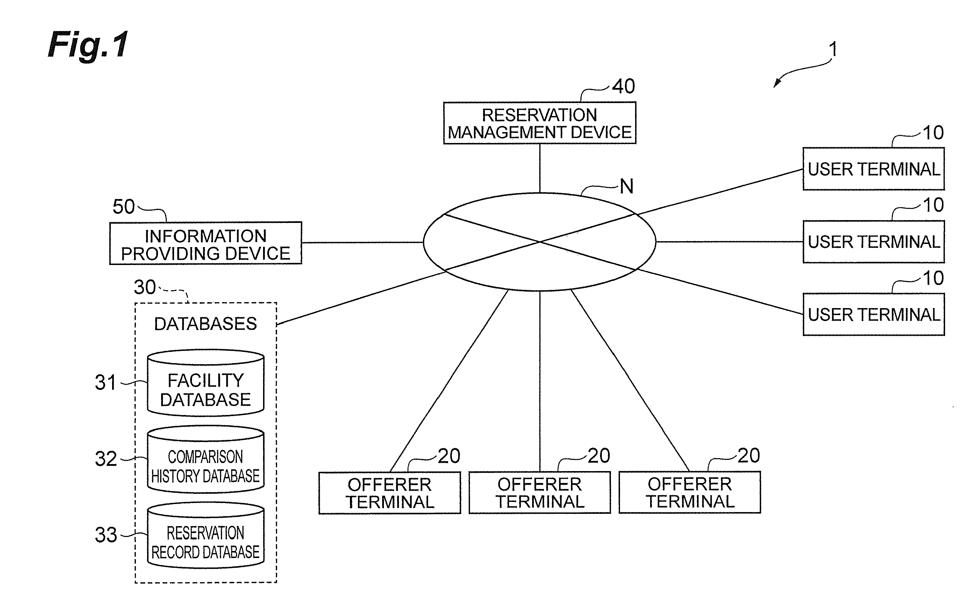

The functions and configuration of an accommodation reservation system 1 according to this embodiment are described firstly with reference to Figs. 1 to 6. The accommodation reservation system 1 is a computer system that offers a website (accommodation reservation site) that accepts reservations for accommodation facilities (public facilities) to users. As shown in Fig. 1, the accommodation reservation system 1 includes user terminals 10, offerer terminals 20 installed in accommodation facilities such as hotels and inns, databases 30, a reservation management device 40, and an information providing device 50. The user terminals 10, the offerer terminals 20, the databases 30, the reservation management device 40 and the information providing device 50 can communicate with one another through a communication network N, which is the Internet, a wireless LAN, a mobile communication network or the like. Although three user terminals 10 and three offerer terminals 20 are shown in Fig. 1, the number of those devices in the accommodation reservation system 1 is arbitrary.

The user terminals 10 are terminals owned by users who make reservations for a room. Examples of the user terminals 10 include advanced mobile phones (smart phones), personal digital assistants (PDA), personal computers (PC) and the like, though the variety of the mobile terminals is not limited thereto. A user can access the accommodation reservation site by operating the user terminal 10 and search accommodation facilities or accommodation plans and make reservations for the accommodation facility or accommodation plan found by the search.

The offerer terminals 20 are terminals of accommodation facilities that offer rooms and accommodation plans for which reservations are to be made in the accommodation reservation system 1. An example of the offerer terminals 20 is a PC; however, various types of mobile terminals can be also used as the offerer terminals 20. An administrator of accommodation facilities can store facility information about facilities and plan information about accommodation plans into a facility database 31 by operating the offerer terminal 20. Further, the offerer terminals 20 can acquire recommendation information to be referred to when creating accommodation plans from the information providing device 50. The facility information, the plan information and the recommendation information are described later.

The databases 30 are a means of storing various information that are used in the accommodation reservation system 1. The databases 30 include a facility database (trading object storage unit) 31, a comparison history database (comparison information storage unit) 32, and a reservation record database (order information storage unit) 33.

The facility database 31 is a means of storing two kinds of information (trading object information) related to accommodation facilities: facility information (fixed information) and plan information (additional information). The facility information and the plan information are stored into the facility database 31 by the offerer terminal 20.

The facility information is information indicating the features and environments of accommodation facilities, and it is, stated differently, information related to hardware attributes that are difficult to change. Stated further differently, it is information indicating attributes of accommodation facilities themselves. Examples of the facility information include the locations of accommodation facilities, the presence or absence of hot springs, the presence or absence of various features such as open-air baths, restaurants and sports facilities, the presence or absence of nearby facilities or tourist spots and the like, through not limited thereto.

On the other hand, the plan information is information indicating accommodation plans (which are hereinafter also referred to simply as "plans") offered by accommodation facilities, and it is, stated differently, information related to software attributes that are relatively easily changeable according to the situation. Examples of the plan information include the details of meals, the presence or absence of eating and drinking services such as all-you-can-drink, the presence or absence of extra services such as massages and beauty treatments, the availability of consecutive night stays, the availability of late check-in, the offered price, the offered period (available dates), the user evaluations on facilities and the like, through not limited thereto. As described earlier, the facility information and the plan information are stored into the facility database 31 by the offerer terminals 20.

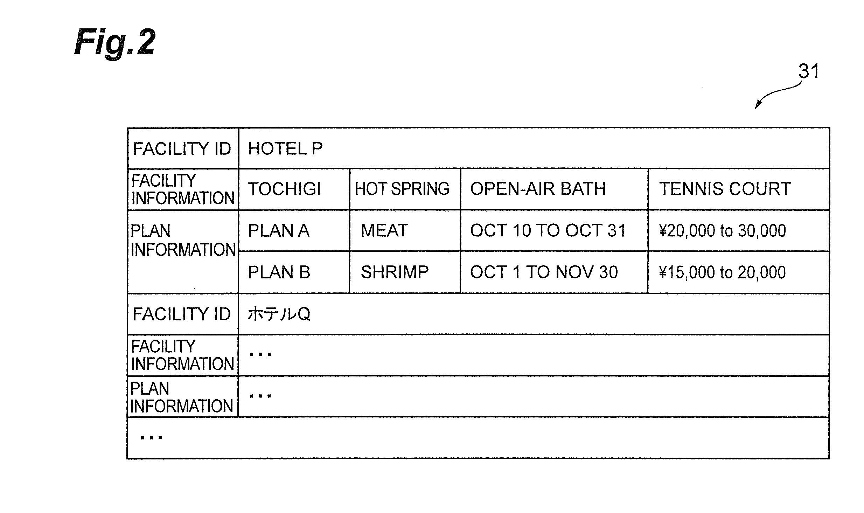

Fig. 2 shows an example of the facility information and the plan information. In the example of Fig. 2, as the facility information of "hotel P", the keyword "Tochigi" that is related to the location and the keywords "hot spring", "open-air bath" and "tennis court" that are related to the feature facilities are stored. Further, as the plan information of "hotel P", the plan information "plan A" containing the keyword "meat" related to the menu, the offered period "October 10 to October 31" and the price "20,000 to 30,000 yen" and the plan information "plan B" containing the keyword "shrimp" related to the menu, the offered period "October 1 to November 30" and the price "15,000 to 20,000 yen" are stored.

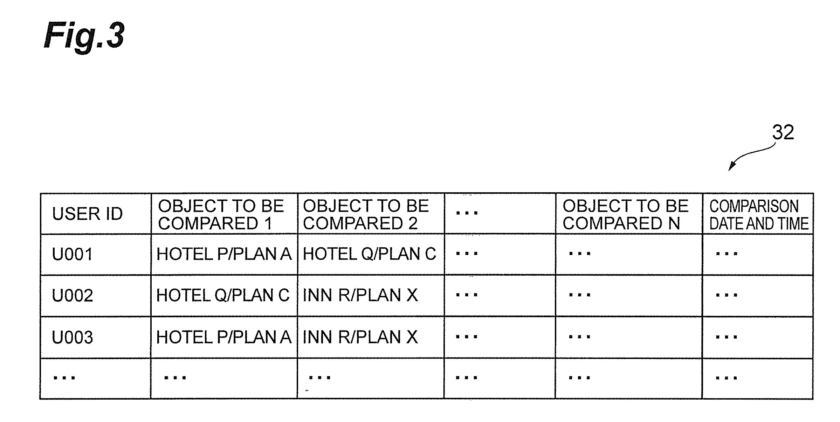

The comparison history database 32 is a means of storing comparison information indicating that users have made comparisons between a plurality of facility information and plan information. As shown in Fig. 3, the comparison information includes a user ID that identifies a user who has made a comparison operation, at least two selected objects to be compared, and comparison date and time. The objects to be compared are indicated by a combination of the facility ID and the plan ID. For example, it is seen from Fig. 3 that a user identified by the user ID "U001" has made a comparison between the plan A of the hotel P and the plan C of the hotel Q. The comparison information is generated and stored by the reservation management device 40 when a user has explicitly made an operation to compare facilities and plans or when it is estimated that such an operation has been performed.

A method of generating the comparison information by the reservation management device 40 is not limited. For example, the reservation management device 40 may generate the comparison information by associating a plurality of accommodation facilities and accommodation plans selected as objects to be compared by a user in order to obtain a comparative table of plans (the comparative table in the form as shown in the above Non Patent Literature 1, for example).

Further, the reservation management device 40 may store a user ID and URL contained in HTTP request for obtaining a web page in association with viewing date and time as viewing information into a specified database and generate the comparison information based on the way of page transition in the user terminal 10 which is obtained from the viewing information.

For example, when page transition occurs among a plurality of specific plans, the reservation management device 40 may generate the comparison information including the plurality of plans. For example, regarding a webpage Wx showing a plan A of a hotel P and a webpage Wy showing a plan X of an inn R, if the page transition of "page Wx -> page Wy -> page Wx" occurs, the reservation management device 40 generates the comparison information in which the plan A of the hotel P and the plan X of the inn R are associated. Further, assuming that there is a page Wz showing a plan C of a hotel Q, if the page transition of "page Wx -> page Wy -> page Wz -> page Wy -> page Wx" occurs, the reservation management device 40 may generate the comparison information in which the plan A of the hotel P, the plan X of the inn R, and the plan C of the hotel Q are associated. Further, the reservation management device 40 may associate only the plan of the page that is displayed a specified number of times or more during the page transition. When a threshold is 2 in the above example, the reservation management device 40 generates the comparison information in which the plan A of the hotel P and the plan X of the inn R are associated.

Alternatively, the reservation management device 40 may generate the comparison information including a plurality of plans corresponding to a plurality of pages that have been displayed on the user terminal 10 for a specified period of time or longer (for example, for 1 minute or longer) within a specified time range (for example, within 10 minutes). For example, assuming that the threshold is 1 minute, regarding the webpage Wx showing the plan A of the hotel P, the webpage Wy showing the plan X of the inn R, and the webpage Wz showing the plan C of the hotel Q, if the page transition of "page Wx (viewing time: 1 minute) -> page Wy (viewing time: 5 seconds) -> page Wx (viewing time: 3 minutes)" occurs, the reservation management device 40 generates the comparison information in which the plan A of the hotel P and the plan C of the hotel Q are associated. Further, assuming that there is a page Wv showing a plan E of a hotel S and that the threshold is 1 minute, if the page transition of "page Wv (viewing time: 4 minutes) -> page Wx (viewing time: 1 minute) -> page Wy (viewing time: 5 seconds) -> page Wz (viewing time: 3 minutes)" occurs, the reservation management device 40 generates the comparison information in which the plan A of the hotel P, the plan C of the hotel Q and the plan E of the hotel S are associated.

Alternatively, when the operation for the same page transition occurs between a plurality of specific plans, the reservation management device 40 may generate the comparison information including the plurality of plans. Specifically, when the page transitions in order of "the page of the plan A of the hotel P" -> "the detail page of the hotel P"→ "the page of the plan X of the inn R" -> "the detail page of the inn R" occurs, the reservation management device 40 generates the comparison information by associating the plan A of the hotel P and the plan X of the inn R for which the page transition has made in the same pattern. Alternatively, when the page transition of "the page of the plan A of the hotel P" -> "the detail page of the inn R"-> "the page of the plan X of the inn R" occurs, the reservation management device 40 may generate the comparison information in which the plan A of the hotel P and the plan X of the inn R are associated.

In this manner, by taking the page transition, the display time or the operation for page transition into consideration, it is possible to accurately estimate the objects of trading compared by a user and automatically generate the comparison information without need for an explicit comparison operation by the user.

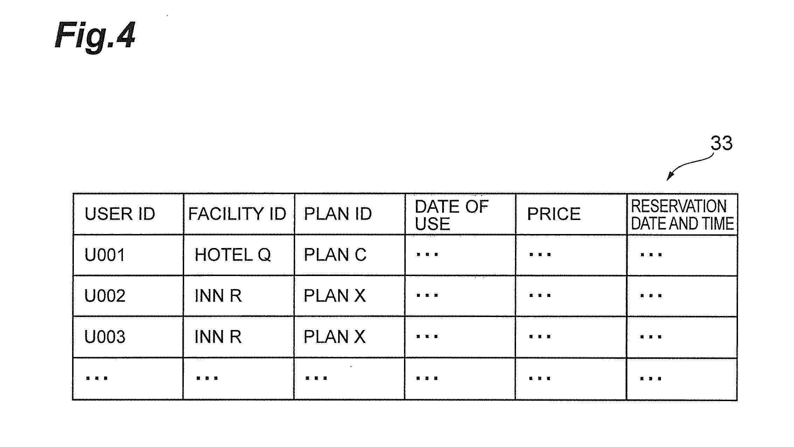

The reservation record database 33 is a means of storing reservation information (order information) indicating reservations for accommodation facilities by users. As shown n Fig. 4, the reservation information includes a user ID, a facility ID, a plan ID, a date of use ,a price, and a date of reservation. The reservation information is generated and stored by the reservation management device 40 when the user terminal 10 requests processing to make reservations to the reservation management device 40 in response to a user operation, and the reservation management device 40 executes processing to accept reservations in response to the request.

Note that the structure of each database is not limited to the above example, and each database may be normalized or made redundant by an arbitrary policy.

The reservation management device 40 is a computer that offers various services related to accommodation reservations such as search of accommodation facilities, provision of comparison information of facilities and plans, and acceptance of accommodation reservations to users through the accommodation reservation site.

On the assumption of the above, the information providing device 50 is described. The information providing device 50 is a computer that provides recommendation information that contributes to creating accommodation plans to accommodation facilities.

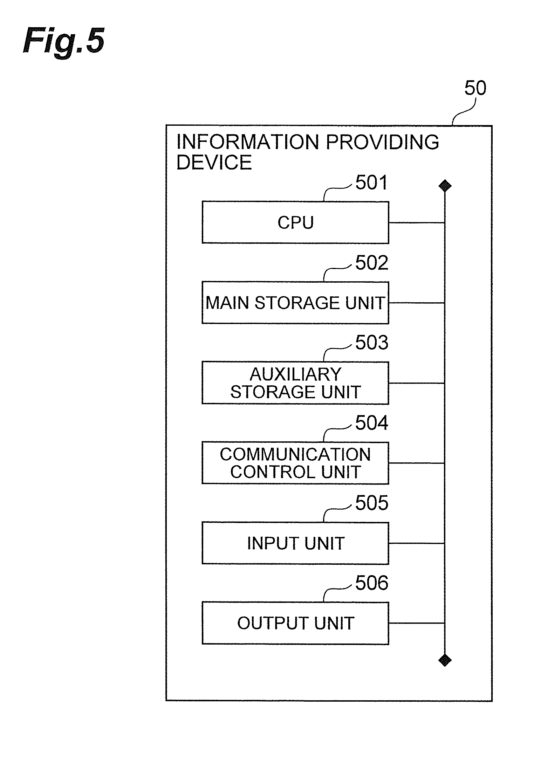

As shown in Fig. 5, the information providing device 50 is composed of a CPU 501 that executes an operating system, an application program and the like, a main storage unit 502 such as ROM and RAM, an auxiliary storage unit 503 such as a hard disk, a communication control unit 504 such as a network card, an input unit 505 such as a keyboard and a mouse, and an output unit 506 such as a display.

The functional components of the information providing device 50 described later are implemented by loading given software onto the CPU 501 or the main storage unit 502, making the communication control unit 504, the input device 505, the output device 506 and the like operate under control of the CPU 501, and performing reading and writing of data in the main storage unit 502 or the auxiliary storage unit 503. The data and database required for processing are stored in the main storage unit 502 or the auxiliary storage unit 503. Note that, although the information providing device 50 is composed of one computer in Fig. 5, the functions of the information providing device 50 may be distributed among a plurality of computers.

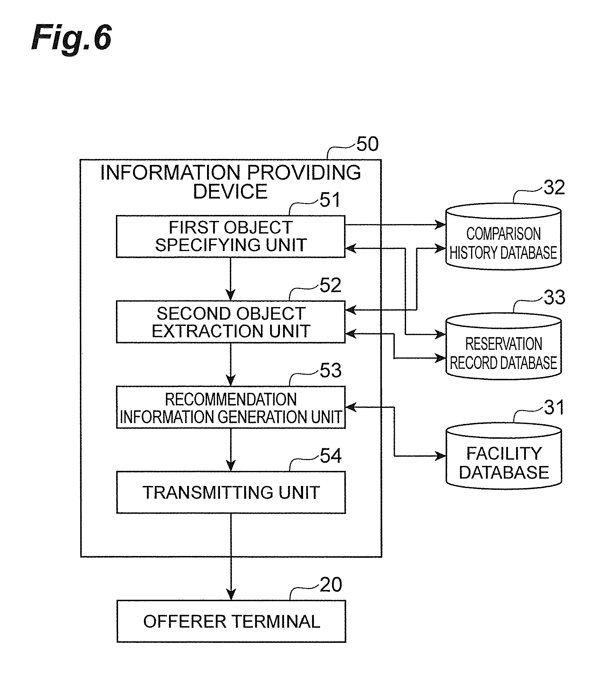

As shown in Fig. 6, the information providing device 50 includes, as functional components, a first object specifying unit 51, a second object extraction unit 52, a recommendation information generation unit 53, and a transmitting unit (presentation unit) 54.

The first object specifying unit 51 is a means of specifying a facility and a plan that are included in the comparison information and not included in the reservation information corresponding to the comparison information as a first object of trading. Thus, the first object of trading is the facility and the plan that have not been reserved as a result of a comparison by a user.

First, the first object specifying unit 51 refers to the comparison information in the comparison history database 32 and the reservation information in the reservation record database 33 and associates those two kinds of information. The association means specifying successive operations by one user. The first object specifying unit 51 specifies successive operations by one user by comparing the comparison date and time of the comparison information and the reservation date and time of the reservation information for the same user and associating the comparison information and the reservation information that are successive in time.

Next, the first object specifying unit 51 refers to the comparison information and the reservation information associated as successive operations and extracts a combination of a facility and a plan that are included in the comparison information and not included in the reservation information. For example, if the comparison information and the reservation information of the user ID "U001" shown in Figs. 3 and 4 are associated, the first object specifying unit 51 specifies the plan A of the hotel P as the first object of trading.

The first object specifying unit 51 specifies the first object of trading for each operation of each user. A user makes a comparison among three or more facilities and plans in some cases and, in such a case, the first object specifying unit 51 specifies a plurality of first objects of trading for one set of successive operations. The first object specifying unit 51 outputs information indicating the first object of trading, which is a combination of the facility ID and the plan ID, to the second object extraction unit 52.

The second object extraction unit 52 is a means of extracting a combination of a facility and a plan that has been compared with the combination of the facility and the plan which is the first object of trading and reserved by a user as a second object of trading. The second object extraction unit 52 performs the following processing for each of the input one or more first objects of trading.

First, the second object extraction unit 52 refers to the comparison history database 32 and the reservation record database 33 and specifies a combination of a facility and a plan that has been compared with the first object of trading and then ordered for reservations in the successive operations. For example, if the comparison information and the reservation information of the user ID "U001" shown in Figs. 3 and 4 are associated with each other, and the comparison information and the reservation information of the user ID "U003" are associated with each other, the first object specifying unit 51 extracts the plan C of the hotel Q and the plan X of the inn R as the second objects of trading corresponding to the first object of trading "the plan A of the hotel P". In this manner, a plurality of second objects of trading can be extracted for one first object of trading.

The second object extraction unit 52 extracts one or more second objects of trading for each first object of trading and then outputs information indicating a combination of the first object of trading and the second object of trading to the recommendation information generation unit 53.

The recommendation information generation unit 53 is a means of generating recommendation information indicating a proposal related to the plan information based on the information of the first and second objects of trading input from the second object extraction unit 52 and outputting the recommendation information to the transmitting unit 54. The recommendation information generation unit 53 generates the recommendation information for each of the input sets of the first and second objects of trading.

A method of generating the recommendation information is not limited. For example, the recommendation information generation unit 53 may acquire the facility information and the plan information of the input second object of trading from the facility database 31 and generate the recommendation information by using the facility information and the plan information. Alternatively, the recommendation information generation unit 53 may generate the recommendation information by using only the plan information of the second object of trading. This is because, while the facility information is information about hardware such as feature facilities and therefore, even if accommodation facilities receive a proposal for feature facilities, they cannot easily deal with it, the plan information is information about software and therefore accommodation facilities can relatively easily change accommodation plans.

Further, the recommendation information generation unit 53 may generate the recommendation information that allows creation of plans for which many reservations are likely to be made by ranking or selecting the second objects of trading on the basis of the number of times searched, the number of reservations or the conversion rate (the probability that reservations are made with respect to the number of accesses). As one example, the recommendation information generation unit 53 may place the second objects of trading in descending order of the number of times searched, the number of reservations or the conversion rate and generate the recommendation information to more strongly recommend the information of the second object of trading placed in the higher rank. Alternatively, the recommendation information generation unit 53 may store a threshold for the number of times searched, the number of reservations or the conversion rate in advance and generate the recommendation information by using only the information of the second object of trading where the number of times searched, the number of reservations or the conversion rate is equal to or larger than the threshold.

The recommendation information generation unit 53 generates the recommendation information "the plan α with "crab + consecutive night stays" for which needs are strong and the plan β "massage + beauty treatment" which has the high conversion rate are recommended", for example, using those indicators.

Although a method of generating the recommendation information is arbitrary as described above, in any case, the recommendation information generation unit 53 outputs the generated recommendation information to the transmitting unit 54. Note that the recommendation information may be represented as information of a new plan which accommodation facilities can use as it is, or represented as statistical information to serve when accommodation facilities create a new plan.

The transmitting unit 54 is a means of transmitting the input recommendation information to the offerer terminal 20 of the accommodation facility corresponding to the first object of trading. The recommendation information is thereby presented to the accommodation facility.

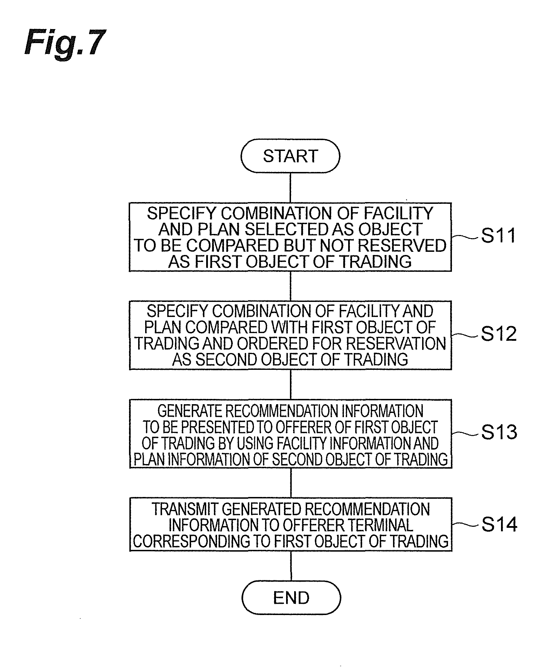

The operation of the information providing device 50 is described, and further, an information providing method according to this embodiment is described hereinafter with reference to Fig. 7.

First, the first object specifying unit 51 specifies a combination of a facility and a plan that has been selected as an object to be compared but not reserved as a first object of trading (Step S11, specifying step). Specifically, the first object specifying unit 51 refers to the comparison information and the reservation information associated as successive operations and specifies a combination of a facility and a plan that are included in the comparison information and not included in the reservation information as the first object of trading.

Next, the second object extraction unit 52 extracts a combination of a facility and a plan that has been compared with the first object of trading and ordered for reservations as the second object of trading (Step S12, extraction step). Specifically, the second object extraction unit 52 refers to the comparison history database 32 and the reservation record database 33 and extracts a combination of a facility and a plan that has been compared with the first object of trading and then ordered for reservations in the successive operations.

Then, the recommendation information generation unit 53 generates the recommendation information to be presented to an offerer of the first object of trading by using any one of various techniques as described above based on the facility information and the plan information of the extracted second object of trading (Step S13, generation step). After that, the transmitting unit 54 transmits the generated recommendation information to the offerer terminal 20 corresponding to the first object of trading (Step S14, presentation step). An administrator of the accommodation facility corresponding to the first object of trading can thereby grasp the needs of users and create accommodation plans that meet the needs.

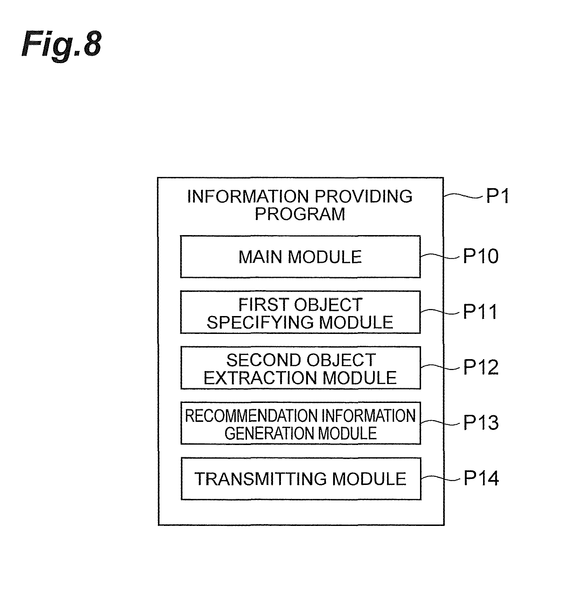

Hereinafter, an information providing program that causes a computer to function as the information providing device 50 is described with reference to Fig. 8.

An information providing program P1 includes a main module P10, a first object specifying module P11, a second object extraction module P12, a recommendation information generation module P13, and a transmitting module P 14.

The main module P10 is a part that exercises control over the information providing functions. The functions implemented by executing the first object specifying module P11, the second object extraction module P12, the recommendation information generation module P 13, and the transmitting module P14 are equal to the functions of the first object specifying unit 51, the second object extraction unit 52, the recommendation information generation unit 53 and the transmitting unit 54 described above, respectively.

The information providing program P1 is provided in the form of being recorded in a static manner on a recording medium such as CD-ROM or DVD-ROM or semiconductor memory, for example. Further, the information providing program P1 may be provided as a computer data signal superimposed onto a carrier wave through a communication network.

As described above, according to this embodiment, the first object of trading that is included in the comparison information and not included in the order information is specified. The first object of trading is an object of trading that has been compared with another object of trading but not ordered by a user. Then, the second object of trading that has been compared with the first object of trading and ordered is extracted, the recommendation information is generated based on the information of the second object of trading, and the recommendation information is presented to an offerer of the first object of trading. In this manner, by presenting the information of the second object of trading that has been ordered as a result of a comparison with the first object of trading that has not been ordered to an offerer of the first object of trading, the offerer can understand the needs of the user.

Embodiments of the present invention are described in detail above. However, the present invention is not limited to the above-described embodiments. Various changes and modifications may be made to the present invention without departing from the scope of the invention.

Although the present invention is applied to an accommodation reservation system in the above-described embodiment, the present invention can be applied also to a system of a virtual shopping mall that accepts purchase of items, a system that accepts reservations for golf courses (golf competition plans) and the like. Accordingly, the object of trading is also not limited to rooms and accommodation plans of accommodation facilities, and it may be a tangible or intangible product (service) or use of public facilities such as golf courses. The attributes indicated by the fixed information and the additional information differ depending on the object of trading. For example, if the object of trading is a stationery product, the attributes of the stationery product (size, color, function etc.) are indicated by the fixed information and the attributes which are changeable by an offerer (shipping charge, the presence or absence of extra volume etc.) are indicated by the additional information.

The reservation management device 40 and the information providing device 50 in the above-described embodiment may be integrated into one device (server). In this case, the information providing device includes functions of a comparison information registration unit that generates the comparison information and stores it into the comparison history database 32, a reservation information registration unit that generates the reservation information and stores it into the reservation record database 33 and the like.

### Reference Signs List

1... accommodation reservation system, 10...user terminal, 20...offerer terminal, 30... databases, 31... facility database, 32... comparison history database, 33...reservation record database, 40...reservation management device, 50...information providing device, 51...first object specifying unit, 52...second object extraction unit, 53...recommendation information generation unit, 54...transmitting unit, P1... information providing program, P10...main module, P11... object specifying module, P12... object extraction module, P 13... recommendation information generation module, P14...transmitting module

## Claims

1. An information providing device comprising:
a specifying unit that, by referring to a comparison information storage unit that stores comparison information indicating that a user has made a comparison between a plurality of objects of trading and an order information storage unit that stores order information indicating an object of trading ordered from a user as a result of a comparison with another object of trading, specifies an object of trading included in the comparison information and not included in the order information corresponding to the comparison information as a first object of trading;
an extraction unit that, by referring to the comparison information storage unit and the order information storage unit, extracts a second object of trading compared with the first object of trading and ordered from a user;
a generation unit that generates recommendation information based on trading object information of the second object of trading read from a trading object storage unit that stores trading object information; and
a presentation unit that presents the recommendation information to an offerer of the first object of trading.

2. The information providing device according to Claim 1, wherein
the generation unit calculates the number of times searched for the second object of trading by referring to the comparison information storage unit, and generates the recommendation information based on the trading object information of the second object of trading where the number of times searched is equal to or larger than a predetermined threshold.

3. The information providing device according to Claim 1, wherein
the generation unit calculates a conversion rate of the second object of trading by referring to the comparison information storage unit and the order information storage unit, and generates the recommendation information based on the trading object information of the second object of trading where the conversion rate is equal to or larger than a predetermined threshold.

4. The information providing device according to any one of Claims 1 to 3, wherein
the trading object information includes fixed information indicating fundamental attributes of an object of trading and additional information indicating additional attributes of the object of trading, and
the generation unit generates the recommendation information based on the additional information of the second object of trading without using the fixed information of the second object of trading.

5. The information providing device according to any one of Claims 1 to 4, wherein
the comparison information is generated, when page transition between web pages of a plurality of objects of trading is made, by associating the plurality of objects of trading with each other.

6. The information providing device according to any one of Claims 1 to 4, wherein
the comparison information is generated by associating a plurality of objects of trading corresponding to a plurality of web pages displayed for a specified period of time or longer within a specified time range with each other.

7. The information providing device according to any one of Claims 1 to 4, wherein
the comparison information is generated, when an operation for the same page transition is made for a plurality of objects of trading, by associating the plurality of objects of trading with each other.

8. An information providing method executed by an information providing device, comprising:
a specifying step of, by referring to a comparison information storage unit that stores comparison information indicating that a user has made a comparison between a plurality of objects of trading and an order information storage unit that stores order information indicating an object of trading ordered from a user as a result of a comparison with another object of trading, specifying an object of trading included in the comparison information and not included in the order information corresponding to the comparison information as a first object of trading;
an extraction step of, by referring to the comparison information storage unit and the order information storage unit, extracting a second object of trading compared with the first object of trading and ordered from a user;
a generation step of generating recommendation information based on trading object information of the second object of trading read from a trading object storage unit that stores trading object information; and
a presentation step of presenting the recommendation information to an offerer of the first object of trading.

9. An information providing program causing a computer to implement:
a specifying unit that, by referring to a comparison information storage unit that stores comparison information indicating that a user has made a comparison between a plurality of objects of trading and an order information storage unit that stores order information indicating an object of trading ordered from a user as a result of a comparison with another object of trading, specifies an object of trading included in the comparison information and not included in the order information corresponding to the comparison information as a first object of trading;
an extraction unit that, by referring to the comparison information storage unit and the order information storage unit, extracts a second object of trading compared with the first object of trading and ordered from a user;
a generation unit that generates recommendation information based on trading object information of the second object of trading read from a trading object storage unit that stores trading object information; and
a presentation unit that presents the recommendation information to an offerer of the first object of trading.

10. A computer-readable recording medium storing an information providing program causing a computer to implement:
a specifying unit that, by referring to a comparison information storage unit that stores comparison information indicating that a user has made a comparison between a plurality of objects of trading and an order information storage unit that stores order information indicating an object of trading ordered from a user as a result of a comparison with another object of trading, specifies an object of trading included in the comparison information and not included in the order information corresponding to the comparison information as a first object of trading;
an extraction unit that, by referring to the comparison information storage unit and the order information storage unit, extracts a second object of trading compared with the first object of trading and ordered from a user;
a generation unit that generates recommendation information based on trading object information of the second object of trading read from a trading object storage unit that stores trading object information; and
a presentation unit that presents the recommendation information to an offerer of the first object of trading.
